# EUROPÄISCHE PATENTSCHRIFT

(11) **EP 0 702 057 B1**
(45) Veröffentlichungstag und Bekanntmachung des Hinweises auf die Patenterteilung: **08.05.2002**
(21) Anmeldenummer: 95113308.1
(22) Anmeldetag: 24.08.1995
(51) Int. Cl.: C08L 31/02, C09J 131/02

(54) **Heterogene Polyvinylester-Dispersionen und - Pulver**
Heterogenous polyvinylester dispersions and powders
Dispersions et poudres de polyvinylester hétérogènes

(30) Priorität: 02.09.1994 DE 4431343; 22.05.1995 DE 29508505 U
(43) Veröffentlichungstag der Anmeldung: 20.03.1996
(73) Patentinhaber: Clariant GmbH, 65929 Frankfurt am Main (DE)
(72) Erfinder: Jakob, Martin, Dr., D-65779 Kelkheim (DE); Seip, Detlev, Dr., D-65779 Kelkheim (DE); Matz, Volker, Dr., D-60529 Frankfurt (DE); Hess, Stefan, Dr., D-64521 Gross-Gerau (DE)

(56) Entgegenhaltungen:
- CA-A- 2 110 449
- DE-A- 1 494 508
- US-A- 3 853 686
- DATABASE WPI Section Ch, Week 9317 Derwent Publications Ltd., London, GB; Class A14, AN 93-140466 XP002048844 & JP 05 078 541 A (SEKISUI CHEM IND CO LTD) , 30.März 1993
- DATABASE WPI Section Ch, Week 9414 Derwent Publications Ltd., London, GB; Class A18, AN 94-115397 XP002048845 & JP 06 065 550 A (SUMITOMO CHEM CO LTD) , 8.März 1994

## Beschreibung

Die vorliegende Erfindung betrifft eine Schutzkolloid-stabilisierte heterogene Polyvinylester-Dispersion, ein Verfahren zu deren Herstellung sowie deren Verwendung als Lösemittel- und Weichmacher-freier Klebstoff zum Verkleben von porösen Substraten.

Dispersionsklebstoffe, die vielfach auf Basis von Polyvinylestern aufgebaut sind, werden in der Praxis häufig mit niedrig- oder hochsiedenden Lösemitteln formuliert. In ihrer Funktion als temporäre Weichmacher dienen die Lösemittel als Hilfsmittel zur Filmkonsolidierung, indem sie die minimale Filmbildetemperatur beziehungsweise den Weißpunkt der Dispersionen erniedrigen. Diese Maßnahme gewährleistet die Verarbeitbarkeit der Klebstoffe auch bei Temperaturen, die nur wenig oberhalb des Gefrierpunkts von Wasser liegen. Ihr Vorteil liegt in einer nur geringen negativen Beeinflussung der mechanischen Eigenschaften des Klebefilms, ein großer Nachteil ist jedoch die Abgabe der Lösemittel an die Umwelt. Eine Auflistung von zu diesem Zweck geeigneten gängigen Lösemitteln findet sich beispielsweise in Wood Adhesives, Chemistry and Technology, Band 1, Marcel Dekker, New York, 1989, auf S. 332/333 sowie in Band 2 auf S. 44.

Eine weitere Funktion der Lösemittel besteht in der Verhinderung einer Koagulation der Dispersionen bei Lagerung der Klebstoffe bei tiefen Temperaturen. Der Zusatz von Niedrigsiedern wie Methanol, Ethanol und Aceton als Frostschutzmittel zu Polyvinylacetatdispersionen wird in Chemical Abstracts 86: 56287s beschrieben.

Eine andere Gruppe von höhersiedenden Verbindungen wird als permanente Weichmacher den Klebstoffdispersionen zugesetzt. In diese Gruppe sind beispielsweise Dibutylphthalat und ähnliche Verbindungen einzuordnen. Diese verbleiben zwar nach dem Trocknen im Film, können jedoch die Wärmestabilität der Klebverbindung und deren Resistenz gegen kalten Fluß beeinträchtigen. Eine Übersicht über diese Verbindungen findet sich ebenfalls in Wood Adhesives, Chemistry and Technology, Band 1, Marcel Dekker, New York, 1989, auf S. 331 sowie in Band 2 auf S. 43/44.

Eine Lösungsmittel- und Weichmacher-freie Klebstoffzusammensetzung ist im Hinblick auf den Umwelt- und Anwenderschutz daher grundsätzlich von Vorteil, da sowohl auf toxikologisch bedenkliche, als auch bei der Anwendung geruchsbelästigende oder umweltgefährdende Stoffe gänzlich verzichtet wird. Sie kann deshalb insbesondere in als "lösemittelfrei" gekennzeichneten Klebstoffrezepturen verwendet werden.

Klebstoffe auf wäßriger Basis, bei denen aufgrund innerer Plastifizierung des Polyvinylacetats mit geeigneten Comonomeren wie Ethylen der Zusatz von Filmbildehilfsmitteln oder Weichmachern entfallen kann, finden sich in der Patentliteratur.

So werden in DE-C 31 15 601 wäßrige Kunstharzemulsionen für die Verwendung beispielsweise in einem Klebstoff, Papierbehandlungsmittel oder Anstrichmaterial beschrieben, darunter auch Polyvinylacetat-Emulsionsklebstoffe für Holz, die eine gute Stabilität gegen Einfrieren beim Lagern bei tiefen Temperaturen besitzen. Ein Emulsionsklebstoff für Holz auf Basis eines Copolymeren aus Vinylacetat und Ethylen wird ebenfalls beschrieben. Die Tieftemperaturstabilität der Dispersionen wird ohne Zusatz von Lösemitteln hauptsächlich durch die Verwendung von acetoacetylierten Polyvinylalkoholen als Schutzkolloid erreicht.

DE-A 23 01 099 beschreibt ein Verfahren zur Herstellung von mit teilverseiftem Polyvinylalkohol stabilisierten Klebemitteln auf Basis von Terpolymeren aus Vinylacetat, Ethylen und N-Methylolacrylamid. Diese Polymerisate weisen eine verbesserte Resistenz gegenüber kaltem Fluß und eine erhöhte Wärmebeständigkeit der Klebverbindungen auf. Diese Eigenschaften werden durch eine spezielle Polymerisationsführung erreicht, bei der in einem verzögerten Zulaufverfahren die Monomeren Vinylacetat und N-Methylolacrylamid so zudosiert werden, daß der Anteil an unpolymerisiertem Vinylacetat an der Gesamtmenge des Ansatzes 1 % bei Umsätzen bis 75 % nicht übersteigt.

Weiterhin ist ein Austausch von insbesondere den zum Frostschutz verwendeten Lösemitteln gegen schwerer flüchtige Verbindungen bekannt. So beschreibt DE-A 38 39 936 frostbeständige Dispersionsklebstoffe auf Basis von Polyvinylestern, die Amide aliphatischer Carbonsäuren und/oder der Carbamidsäure, insbesondere Acetamid enthalten. Weichmacher wie Dibutylphthalat oder auch Butyldiglykolacetat sind in den Formulierungen jedoch zusätzlich noch enthalten.

JP-A 78 541/93 beschreibt Polyvinylacetatdispersionen als Holz- und Papierklebstoff mit niedriger Filmbildetemperatur ohne Zugabe von Weichmachern. Diese Zusammensetzungen enthalten jedoch neben Polyvinylalkohol als Schutzkolloid substantielle Mengen beispielsweise 16 Gew.-%, bezogen auf Vinylacetat, eines Copolymeren aus Isobuten und Maleinsäureanhydrid.

In DE-A 27 18 716 wird beschrieben, daß Dispersionshaftkleber auf Basis eines Ethylen-Vinylacetat-Copolymeren durch Zusatz einer Emulsion eines Acrylsäureester-Copolymerisats modifiziert werden kann. Diese Modifizierung führt jedoch aufgrund des bekanntermaßen hohen Preises von Acrylsäureestern zu einer erheblichen Verteuerung dieses Dispersionsklebers.

JP-A 65550/94 beschreibt eine Klebstoffzusammensetzung, bestehend aus einer Mischung von zwei Vinylacetat/Ethylen-Copolymerdispersionen mit Ethylen-Gehalten im Copolymeren von jeweils 5 bis 40 Gew.-%, von denen eine Komponente mit Polyvinylalkohol, die andere mit nichtionischen Emulgatoren stabilisiert wird. Die Präsenz von Ethylen in beiden Komponenten sowie die Anwesenheit von Emulgatoren in mindestens einer Komponente führt zu Verklebungen, deren Wärmestand noch verbesserungsbedürftig ist.

Mit Copolymeren aus Vinylacetat und Ethylen, die mit Polyvinylalkohol stabilisiert werden und nach herkömmlichen Verfahren der Druckemulsionspolymerisation hergestellt werden, sind bei Einpolymerisation hinreichender Mengen an Ethylen, die zu den angestrebten MFT-Werten unterhalb von 7 °C führen, insbesondere nicht die Wärmebeständigkeiten der herkömmlichen Filmbildehilfsmittel enthaltenden, verfilmten Polyvinylester-Homopolymer-Dispersionen zu erreichen (siehe Vergleichsbeispiele V2 und V3 gegenüber V1).

Aufgabe dieser Erfindung war es demnach, unter Verzicht niedrig- und hochsiedende Lösemittel und Weichmacher eine im wesentlichen mittels Schutzkolloiden stabilisierte Klebstoffdispersion aufzufinden, die auf einem Vinylester, insbesondere Vinylacetat, als Monomerbaustein beruhend, im Hinblick auf die anwendungstechnischen Eigenschaften wie der Wärmebeständigkeit der Verklebungen, die Gefrier-Tau-Stabilität der Dispersionen und die Abbindegeschwindigkeit mit den herkömmlichen, lösemittelmodifizierten Polyvinylester-Homopolymer-Dispersionen vergleichbar ist.

Die Aufgabe wird erfindungsgemäß gelöst durch eine heterogene Dispersion aus homo- oder copolymeren Vinylestern mit unterschiedlichen Glasübergangstemperaturen (T_{g}).

Gegenstand der vorliegenden Erfindung ist also ein im wesentlichen mittels Schutzkolloiden stabilisierter, Lösemittel- und Weichmacherfreier heterogener Polyvinylester in Dispersions- oder Pulverform mit einer minimalen Filmbildungstemperatur unterhalb von 10 °C, enthaltend ein
Homo- oder Copolymerisat A mit einer Glasübergangstemperatur oberhalb von 20 °C aus
85 bis 100 Gew.-% mindestens eines Vinylesters von Carbonsäuren mit 1 bis 18 Kohlenstoffatomen (a1),
0 bis 5 Gew.-% mindestens einer α,β-ungesättigten Carbonsäure (a2),
0 bis 5 Gew.-% mindestens einer monoolefinisch ungesättigten Verbindung mit mindestens einer Amino- oder Amidgruppe (a3) sowie
0 bis 5 Gew.-% mindestens eines mehrfach ethylenisch ungesättigten Monomeren (a4), und ein
Copolymerisat B mit einer Glasübergangstemperatur unterhalb von 20 °C aus 45 bis 98 Gew.-% mindestens eines Vinylesters von Carbonsäuren mit 1 bis 18 Kohlenstoffatomen (b1),
2 bis 50 Gew.-% mindestens eines α-Monoolefins mit 1 bis 4 Kohlenstoffatomen (b2) sowie
0 bis 5 Gew.-% mindestens eines mehrfach ethylenisch ungesättigten Monomeren (b3).
Der Mengenanteil der Polymere A und B in der heterogenen Dispersion bzw. im Pulver beträgt 1 : (0,05 bis 1), vorzugsweise 1 : (0,15 bis 1).

Die minimale Filmbildungstemperatur der Dispersion des heterogenen Polyvinylesters beträgt vorzugsweise 0 bis 7 °C.

Als Monomere der Gruppe a1 sind vorzugsweise Vinylester der Carbonsäuren mit 1 bis 18, insbesondere 1 bis 12, Kohlenstoffatomen geeignet, beispielsweise Vinylformiat, Vinylacetat, Vinylpropionat, Vinylisobutyrat, Vinylpivalat, Vinyl-2-ethylhexanoat, Vinylester von gesättigten α-verzweigten Monocarbonsäuren mit 9 oder 10 Kohlenstoffatomen im Säurerest (®Versaticsäuren), sowie Vinylester von längerkettigen gesättigten oder ungesättigten Fettsäuren wie Vinyllaurat oder Vinylstearat sowie Vinylester der Benzoesäure oder p-tert-Butylbenzoesäure. Besonders bevorzugt ist Vinylacetat.

Beispiele für Monomere der Gruppe a2 sind α,β-ungesättigte Säuren wie Acrylsäure, Methacrylsäure, α,β-ungesättigte Dicarbonsäuren wie Maleinsäure, Fumarsäure, Itaconsäure und Citraconsäure sowie deren primäre Monoamide oder sekundäre Monoamide oder Monoester mit jeweils aliphatischen einwertigen Alkoholen mit 1 bis 18, vorzugsweise 1 bis 12 Kohlenstoffatomen. Besonders bevorzugte Monomere sind Acrylsäure und Methacrylsäure. Der Einbau der freien Säuren bewirkt eine Verbesserung der Gefrier-Tau-Stabilität der Dispersionsmischungen.

Beispiele für die monoolefinisch ungesättigten Verbindungen mit mindestens einer Amino- oder Amidgruppe a3 sind (Meth)acrylamid, Allylcarbamat, N-Methylol(meth)acrylamid, N-Methylolallylcarbamat sowie die N-Methylolester, -alkylether oder Mannichbasen des N-Methylol(meth)acrylamids oder N-Methylolallylcarbamats, Acrylamidoglykolsäure, Acrylamidomethoxyessigsäuremethylester, N-(2,2-Dimethoxy-1-hydroxyethyl)-acrylamid. Weitere Beispiele sind N-Dimethylaminopropyl(meth)acrylamid, N-Methyl(meth)acrylamid, N-Butyl(meth)acrylamid, N-Cyclohexyl(meth)acrylamid, N-Dodecyl(meth)acrylamid, N-Benzyl(meth)acrylamid, p-Hydroxyphenyl(meth)acrylamid, N-(3-Hydroxy-2,2-dimethylpropyl)methacrylamid sowie Ethylimidazolidonmethacrylat, Vinylpyrrolidon, N-Vinylformamid und N-Vinylacetamid. Besonders bevorzugt sind die N-Methylolamide von Acrylsäure und Methacrylsäure. Diese Comonomere ermöglichen es, in Kombination mit sauren Härtern wasserresistente Klebstoffe zu erhalten. Außerdem bewirken sie aufgrund ihrer vernetzbaren Gruppen eine höhere Wärmeresistenz der verfilmten Dispersionsgemische (Beispiele 4 und 5).

Beispiele für Monomere der Gruppe a4 sind Diallylphthalat, Diallylmaleinat, Triallylcyanurat, Tetraallyloxyethan, Divinylbenzol, Butandiol-1,4-dimethacrylat,Triethylenglykoldimethacrylat, Divinyladipat, Allyl(meth)acrylat, Vinylcrotonat, Methylenbisacrylamid, Hexandioldiacrylat, Pentaerythroldiacrylat und Trimethylolpropantriacrylat.

Als Vinylester der Gruppe b1 sind vorzugsweise die in der Gruppe a1 genannten Verbindungen geeignet, die bezüglich der im Polymer A verwendeten gleich oder verschieden sein können. Vorzugsweise ist der für das Copolymerisat B eingesetzte Vinylester derselbe, der im Polymer A verwendet wird, insbesondere Vinylacetat.

Als Monomer der Gruppe b2 wird insbesondere Ethylen eingesetzt.

Als Monomere der Gruppe b3 eignen sich die unter a4 genannten Verbindungen, die bezüglich der im Polymer A verwendeten gleich oder verschieden sein können.

Die Glasübergangstemperatur des Copolymers A liegt vorzugsweise oberhalb von 25 °C, insbesondere bei mindestens 30 °C.

Die Glasübergangstemperatur des Copolymeren der Komponente B liegt vorzugsweise unterhalb von 15 °C, insbesondere unterhalb von 10 °C.

Beide Copolymere werden in der Dispersion durch Schutzkolloide stabilisiert, vorzugsweise durch ein oder mehrere Polyvinylalkohole, die insbesondere einen Hydrolysegrad von 60 bis 100 Mol-% und eine Viskosität der 4%igen wäßrigen Lösung von 2 bis 70 mPa·s, gemessen bei 20 °C, aufweisen. Der Mengenanteil der Schutzkolloide bezogen auf die Gesamtmasse der jeweiligen Copolymerzusammensetzung, beträgt vorzugsweise 2 bis 20 Gew.-%, insbesondere 5 bis 15 Gew.-%.

Weiterhin können übliche anionische, nichtionische oder kationische Emulgatoren als Costabilisatoren mitverwendet werden. Deren Mengenanteil kann bis zu 3 Gew.-% betragen, bezogen auf die Gesamtmasse der Copolymerzusammensetzung.

Gegenstand der Erfindung ist auch ein Verfahren zur Herstellung einer heterogenen, im wesentlichen mittels Schutzkolloiden stabilisierten, Lösemittel- und Weichmacherfreien Polyvinylester-Dispersion durch Mischen einer Dispersion, enthaltend ein Homo- oder Copolymerisats A mit einer Glasübergangstemperatur oberhalb von 20 °C aus
85 bis 100 Gew.-% mindestens eines Vinylesters von Carbonsäuren mit 1 bis 18 Kohlenstoffatomen (a1),
0 bis 5 Gew.-% mindestens einer α,β-ungesättigten Carbonsäure (a2),
0 bis 5 Gew.-% mindestens einer monoolefinisch ungesättigten Verbindung mit mindestens einer Amino- oder Amidgruppe (a3) sowie
0 bis 5 % Gew.-% mindestens eines mehrfach ethylenisch ungesättigten Monomeren (a4),
mit einer Dispersion, enthaltend ein Copolymerisat B mit einer Glasübergangstemperatur unterhalb von 20 °C aus
45 bis 98 Gew.-% mindestens eines Vinylesters von Carbonsäuren mit 1 bis 18 Kohlenstoffatomen (b1),
2 bis 50 Gew.-% mindestens eines α-Monoolefins mit 1 bis 4 Kohlenstoffatomen (b2) sowie
0 bis 5 Gew.-% mindestens eines mehrfach ethylenisch ungesättigten Monomeren (b3).

Die Herstellung der Dispersionen der homo- beziehungsweise copolymeren Vinylester A und B wird nach üblichen kontinuierlichen oder diskontinuierlichen Verfahren der radikalischen Emulsionspolymerisation beziehungsweise Druckemulsionspolymerisation vorgenommen.

Als Radikalstarter kommen wasserlösliche und/oder öllösliche Initiatorsysteme wie Peroxodisulfate, Azoverbindungen, Wasserstoffperoxid, organische Hydroperoxide oder Dibenzoylperoxid zum Einsatz. Diese können entweder für sich oder in Kombination mit reduzierenden Verbindungen wie Fe(II)-Salzen, Natriumpyrosulfit, Natriumhydrogensulfit, Natriumsulfit, Natriumdithionit, ®Rongalit C (BASF, Natrium-Formaldehyd-Sulfoxylat) oder Ascorbinsäure als Redoxkatalysator-System verwendet werden.

Der als Schutzkolloid benötigte Polyvinylalkohol kann vor der Polymerisation vorgelegt werden, er kann auch während oder nach der Polymerisation zugegeben werden.

Die Feststoffgehalte der Dispersionen A und B betragen jeweils unabhängig voneinander 25 bis 65 Gew.-%, vorzugsweise 30 bis 60 Gew.-%.

Nach beendeter Polymerisation können die Dispersionen zur Entfernung des größten Teils der Restmonomeren nach üblichen chemischen und/oder physikalischen Methoden entmonomerisiert werden. Als Beispiele hierzu seien genannt die chemische Nachbehandlung bei erhöhten Temperaturen mit obengenannten Redoxkatalysatorsystemen, Stripverfahren mit Inertgas oder Dampf sowie die Destillation der Dispersionen.

Die Vermischung der beiden Lösemittel- und Weichmacher-freien Polyvinylester-Dispersionen A und B wird mithilfe üblicher Rührvorrichtungen vorgenommen.

Das prozentuale Verhältnis der beiden Polymere A und B im Dispersionsgemisch wird so gewählt, daß in der Abmischung der Dispersionen der Polymere A und B eine minimale Filmbildetemperatur (MFT) unterhalb von 10 °C, vorzugsweise im Bereich von 0 bis 7 °C, resultiert.

Das Mischungsverhältnis, das zur Einstellung der niedrigen MFT benötigt wird, hängt insbesondere ab von der Glasübergangstemperatur der Polymere A und B in den einzelnen Dispersions-Komponenten, der Art der verwendeten Säuren a2 oder N-funktionellen Comonomeren a3 im Polymer A, der Art und der Menge der zur Stabilisierung verwendeten Polyvinylalkohole und der Partikelgrößenverteilungen der Dispersions-Komponenten. Durch eine Mischungsreihe muß daher zuvor im Einzelfall das optimale Verhältnis der beiden Polymere A und B im Dispersionsgemisch empirisch ermittelt werden. Pro 100 Gewichtsteile des Polymers A werden vom Polymer B 5 bis 200, vorzugsweise 15 bis 100, insbesondere 30 bis 70 Gewichtsteile, verwendet.

Der Dispersion können nach Beendigung des Mischvorgangs weitere Additive nachträglich zugesetzt werden, beispielsweise Entschäumer, Füllstoffe und Konservierungsmittel.

Gegenstand der vorliegenden Erfindung ist ferner ein Verfahren zur Herstellung von heterogenen Polyvinylester-Dispersionspulvern durch Sprühtrocknung der erfindungsgemäß hergestellten Polyvinylester-Dispersionen sowie ein Verfahren zur Herstellung von heterogenen Polyvinylester-Dispersionen durch Redispergieren der Polyvinylester-Dispersionspulver in Wasser.

Die Sprühtrocknung kann in beliebigen zur Sprühtrocknung von Flüssigkeiten geeigneten und dem Fachmann bekannten Vorrichtungen, beispielsweise solchen mit Zweistoffdüsen oder mit einer rotierenden Zerstäuberscheibe durchgeführt wird.

Da die Dispersionsmischungen eine sehr niedrige minimale Filmbildetemperatur, beispielsweise von 0 °C besitzen können, sollten bei der Sprühtrocknung zur Gewährleistung einer geeigneten Lagerstabilität der Dispersionspulver Antibackmittel mitverwendet werden. Geeignete Antibackmittel sind Aluminiumsilikate, Calciumcarbonate oder Kieselsäuren mit einer mittleren Teilchengröße von 0,01 bis 0.5 µm. Die Antibackmittel werden vorzugsweise in Mengen von 0,5 bis 20 Gew.-%, bezogen auf den Feststoffgehalt der Dispersionsmischungen, eingesetzt. Es können jedoch auch, wie in DE-C 31 01 413 beschrieben, hydrophobe Kieselsäuren in den beschriebenen Mengen von 0,1 bis 3 Gew.-%, bezogen auf die Gesamtmenge Vinylesterpolymerisat und Kieselsäure eingesetzt werden. Das Antibackmittel wird gleichzeitig, aber getrennt von der wäßrigen Dispersionsmischung in den Sprühtrocknungsturm mit eingegeben.

Die erfindungsgemäß hergestellten Dispersionspulver besitzen eine gute Lagerstabilität, sind gut rieselfähig und lassen sich mit Wasser schnell zu homogenen, viskositäts- und lagerstabilen Dispersionen anrühren. Die Redispersionen lassen sich hervorragend als wäßrige Holzklebstoffe mit guten, mit herkömmlichen Lösemittel-haltigen Klebstoffen vergleichbaren Bindefestigkeiten verwenden.

Die erfindungsgemäßen heterogenen Polyvinylesterdispersionen eignen sich als Klebstoffe insbesondere zur Herstellung von Holzleimen, zur Herstellung von Spezial-Holzleimen mit erhöhter Wasserresistenz sowie zur Herstellung von Dispersionspulvern, deren Redispersionen wieder Lösemittel- und Weichmacher-freie Klebstoffe darstellen.

Bei mit herkömmlichen Lösemittel-haltigen Klebstoffdispersionen vergleichbaren klebetechnischen Eigenschaften enthalten die erfindungsgemäßen Dispersionen keine über das Maß technischer Verunreinigungen hinausgehenden Mengen flüchtiger Bestandteile in Form niedrig- oder hochsiedender organischer Lösemittel beziehungsweise Weichmacher.

Insbesondere zur Herstellung der erfindungsgemäßen Lösemittel- und Weichmacher-freien Spezialklebstoffe mit erhöhter Wasserresistenz ihrer Klebverbindungen können der erfindungsgemäßen Dispersion die in der Patentliteratur, beispielsweise in DE-B 22 61 402, DE-C 26 20 738 oder DE-A 39 42 628, verschiedentlich beschriebenen aciden Verbindungen, insbesondere wäßrige Lösungen saurer Salze wie Aluminiumchlorid, Aluminiumnitrat oder Zirkonoxychlorid oder Phosphorsäure, als Vernetzungskatalysatoren zugesetzt werden. Danach erfüllen diese Klebstoffe mindestens die Beanspruchungsgruppe D2, vorzugsweise die Beanspruchungsgruppe D3, gemäß der Norm DIN EN 204.

Gegenstand der vorliegenden Erfindung ist auch die Verwendung der erfindungsgemäßen heterogenen Polyvinylester-Dispersionen oder der Redispersionen aus den erfindungsgemäßen sprühgetrockneten heterogenen Dispersionspulvern als Klebstoffe zum Verkleben von porösen oder auch semiporösen Substraten, insbesondere von Holz.

Die folgenden Beispiele dienen zur Erläuterung der Erfindung. Die in den Beispielen aufgeführten Teile und Prozente beziehen sich auf das Gewicht.

### Herstellen der Dispersionskomponenten A für die Beispiele 1 bis 8 sowie für Vergleichsbeispiel V1

### Dispersionen A1 und A2

In einem Glasrührkesselreaktor mit Ankerrührer, der mit Zulaufmöglichkeiten, Rückflußkühler, Mantelheizung - und kühlung sowie Stickstoffanschluß versehen ist, wird eine Lösung von 12 Teilen teilverseifter Polyvinylalkohol vom Hydrolysegrad 88 Mol-% (zusammengesetzt aus je 6 Teilen Polyvinylalkohol einer Viskosität der 4 %igen wäßrigen Lösung von 8 beziehungsweise 18 mPa·s) eines in 95,5 Teilen entionisiertem Wasser hergestellt. Nach Zugabe von 0,1 Teilen Entschäumungsmittel (®Agitan 280, Münzing-Chemie) und Spülen mit Stickstoff werden 5 Teile Vinylacetat einemulgiert. Die Innentemperatur wird auf 50 °C angehoben und die Polymerisation nach Zugabe einer Lösung von 0,03 Teilen tert.-Butylhydroperoxid (70 %ig, ®Trigonox AW 70, Akzo-Chemie) in 0,5 Teilen Wasser sowie mit dem Beginn eines 3,5-stündigen linearen Zulaufs von 0,04 Teilen Rongalit C in 4,2 Teilen Wasser gestartet. Nach 20 Minuten werden zwei Monomerzuläufe gestartet. Diese bestehen einerseits aus 0,5 Teilen Acrylsäure in 9,5 Teilen Wasser und andererseits aus 94,5 Teilen Vinylacetat bei Dispersion A1 beziehungsweise 94,4 Teile Vinylacetat mit 0,1 Teilen Trimethylolpropantriacrylat bei Dispersion A2 mit jeweils 0,09 Gewichtsteilen tert.-Butylhydroperoxid und werden bei einer Innentemperatur von 69 - 73 °C innerhalb von 2,5 Stunden zudosiert. Nach Beendigung des Rongalit C-Zulaufs wird gegebenenfalls mit der nachträglichen Zugabe von wäßrigen Lösungen von Wasserstoffperoxid (30 %) und Ascorbinsäure zur Entfernung der Restmonomeren nachpolymerisiert. Nach Abkühlen wird mit 10 %iger Natronlauge der pH auf den Wert 5 eingestellt. Die Viskositäten der Dispersionen betragen bei Feststoffgehalten von 50 % 39,5 beziehungsweise 44,1 Pa·s (Brookfield RVT 6/20, 23 °C). Die MFT-Werte betragen jeweils 13 °C.

### Dispersion A3

Gemäß der oben angegebenen Vorschrift wird eine Dispersion hergestellt mit dem Unterschied, daß anstelle der Acrylsäurelösung eine Lösung von 2 Teilen N-Methylolacrylamid in 13 Teilen Wasser verwendet wird. Es werden 93 Teile Vinylacetat zudosiert und nur 92 Teile Wasser in der Flotte verwendet. (Die Comonomerlösung wird durch Verdünnen der handelsüblichen 48 %igen Lösung von N-Methylolacrylamid hergestellt.) Nach beendeter Polymerisation wird nicht neutralisiert. Bei einem Feststoffgehalt von 48 % wird eine Viskosität von 21,1 Pa·s (Brookfield RVT 6/20, 23 °C) erhalten. Die MFT beträgt 13 °C.

### Dispersion A 4

In der gleichen wie für die Herstellung der Dispersionen A1 bis A3 verwendeten Apparatur wird bei der Polymerisationstemperatur von 70 °C unter Einsatz von 8 % bezogen auf Polyvinylacetat eines Polyvinylalkohols vom Hydrolysegrad 88 Mol.-% und einer Viskosität der 4 %igen wäßrigen Lösung bei 20 °C von 18 mPa·s und 4 % bezogen auf Polyvinylacetat, eines Polyvinylalkohols gleichen Hydrolysegrades mit einer Viskosität der 4 %igen wäßrigen Lösung bei 20 °C von 8 mPa·s mit Hilfe von 0,15 % bezogen auf Polyvinylacetat des Katalysators Ammoniumpersulfat eine 50 %ige wäßrige Polyvinylacetatdispersion mit einer Latexviskosität von 12 Pa·s (Brookfield RVT 6/20, 23 °C) hergestellt. Die MFT beträgt 15 °C.

### Dispersion AV

Gemäß der bei den Dispersionen A1 bis A3 angegebenen Vorschrift wird eine Dispersion hergestellt, jedoch ohne Comonomerzulauf unter Verwendung von 95 Teilen Vinylacetat im Monomerzulauf und 105 Teilen Wasser in der Polymerisationsflotte. Es erfolgt keine nachträgliche Neutralisation. Bei einem Feststoffgehalt von 49 % wird eine Viskosität von 27,5 Pa·s (Brookfield RVT 6/20, 23 °C) erhalten. Die MFT beträgt 13 °C.

### Dispersionskomponenten B für die Beispiele 1 bis 8 und Vergleichsbeispiele V2 und V3

### Dispersion B1

In einem 30 I-Autoklaven, versehen mit Dosiervorrichtungen, Temperaturregelung und Rührwerk stellt man eine Dispersion auf Basis eines Copolymeren aus Vinylacetat und Ethylen her. Die Katalyse erfolgt mit dem System Ammoniumpersulfat/Rongalit C. Die Polymerisationstemperatur beträgt 80 °C. Es werden 9,4 %, bezogen auf Polymerisat, teilverseifter Polyvinylalkohol vom Hydrolysegrad 88 Mol-% und einer Viskosität der 4 %igen wäßrigen Lösung von 8 mPa·s bei 20 °C in der Polymerisationsflotte verwendet. Zur Einstellung einer Glasübergangstemperatur des Films von ca. 10 °C wird unter einem Ethylendruck von 20 bar am Start polymerisiert. Der Feststoffgehalt beträgt 50 Gew.-% und die MFT 0 °C. Die Dispersion weist eine Latexviskosität von 4,1 Pa·s (Brookfield RVT, 4/20, 23 °C) auf.

### Dispersion B2

Ein Druckemulsionspolymerisat analog Dispersion B1 wird hergestellt mit dem Unterschied, daß unter 50 bar Startdruck des Ethylens polymerisiert wird. Die Polymerisationstemperatur beträgt 60 °C. Es wird unter Einsatz von 7 % bezogen auf Polymerisat, eines Polyvinylalkohols vom Hydrolysegrad 88 Mol.-% und einer Viskosität der 4 %igen wäßrigen Lösung bei 20 °C von 8 mPa·s und 7 % bezogen auf Polymerisat, eines Polyvinylalkohols vom Hydrolysegrad 88 Mol.-% und einer Viskosität der 4 %igen wäßrigen Lösung bei 20 °C von 4 mPa·s als Schutzkolloid polymerisiert. Das Polymerisat weist eine Glasübergangstemperatur von ca. - 10 °C auf. Die MFT beträgt auch hier 0 °C. Die Viskosität beträgt 4 Pa•s (Brookfield RVT 4/20, 23 °C).

### Dispersion B 3

In einem 30 l-Druckreaktionsgefäß mit Temperaturregeleinrichtung und Rührwerk wird bei der Polymerisationstemperatur von 60 °C und einem Ethylendruck von 55 bar unter Einsatz von 7 % bezogen auf Polymerisat, eines Polyvinylalkohols vom Hydrolysegrad 88 Mol-% und einer Viskosität der 4 %igen wäßrigen Lösung bei 20 °C von 8 mPa·s und 7 %, bezogen auf Polymerisat, eines Polyvinylalkohols vom Hydrolysegrad 88 Mol.-% und einer Viskosität der 4 %igen wäßrigen Lösung bei 20 °C von 4 mPa·s und 1 %, bezogen auf Polymerisat, eines mit 25 Mol Ethylenoxid oxethylierten C₁₆-C₁₈-Fettalkohols mit Hilfe der Katalysatorkombination Ammoniumpersulfat/Natriumpyrosulfit eine 50 %ige Vinylacetat/Ethylen-Copolymerdispersion mit einer Latexviskosität von 4 Pa·s (Brookfield RVT 4/20, 23 °C) und einer Glasübergangstemperatur des Polymeren von- 14 °C hergestellt.

### Dispersion für Vergleichsbeispiel V2

In der zur Herstellung der Dispersion B3 verwendeten Apparatur stellt man unter Zuhilfenahme von 8,6 % bezogen auf Polymerisat, teilverseifter Polyvinylalkohol vom Hydrolysegrad 88 Mol.-% und einer Viskosität der wäßrigen Lösung von 18 mPa·s bei 20 °C und der Katalysatorkombination Ammoniumpersulfat/Rongalit eine Dispersion her. Der Ethylendruck beträgt 30 bar, die Reaktionstemperatur 50 °C. Man erhält eine koagulaffreie Dispersion vom Feststoffgehalt 51,7 %, die eine Viskosität von 9,6 Pa·s (Epprecht C/2, 23 °C) aufweist. Die Glasübergangstemperatur beträgt 13 °C. Die MFT weist einen Wert von 2,5 °C auf.

### Dispersion für Vergleichsbeispiel V3

Es wird wie bei der Herstellung des Vergleichsbeispiels V2 verfahren, nur mit dem Unterschied daß unter 20 bar Ethylendruck polymerisiert wird. Bei einem Feststoffgehalt von 52,4 % beträgt die Viskosität 10,9 Pa•s (Epprecht C/2, 23 °C). Die Glasübergangstemperatur beträgt 22 °C. Die MFT weist einen Wert von 5,5 °C auf.

### 1. Herstellung von Lösemittel- und Weichmacher-freien Holzklebstoffen

### Beispiele 1 bis 5 und Vergleichsbeispiel V1

Zur Herstellung der Beispielmischungen 1 - 5 werden in einem Glasgefäß mit Ankerrührer gemäß den Angaben der Tabelle 1 entsprechende Gewichtsteile der Basisdispersionen A1 bis A3 mit den Basisdispersion B1 und B2 abgemischt und mindestens 3 Stunden gut durchgerührt. Im Falle der Beispiele 4 und 5 wird anschließend noch mit Aluminiumchlorid-Lösung als Vernetzungskatalysator modifiziert. Im Falle des Vergleichsbeispiels V1 wird die Dispersion AV zur Absenkung der MFT gemäß dem Stand der Technik mit dem üblichen Filmkonsolidierungsmittel Butyldiglykolacetat formuliert.

Die Analysenergebnisse und die Ergebnisse der anwendungstechnischen Ausprüfungen finden sich ebenfalls in der Tabelle 1.

Die Ermittlung der Reißfestigkeiten an Buchenholzprüflingen erfolgt gemäß der Prüfnorm DIN EN 204.

Die Herstellung der Prüfkörper erfolgt nach der Vorgehensweise der DIN EN 205. Die Verleimung und Prüfung wird unter Berücksichtigung folgender technischer Kenndaten durchgeführt:

| | |
|---|---|
| Leimauftrag | 150 ± 20 g/m² beidseitiger Auftrag |
| Offene Wartezeit | 3 Minuten |
| Geschlossene Wartezeit | 3 Minuten |
| Preßzeit | 2 Stunden |
| Preßdruck | 0,7 ± 0,1 N/mm² |
| Anzahl Prüfkörper pro Prüffolge | 20 |

| | |
|---|---|
| Prüfung nach Lagerungsfolge D1/1: | 7 Tage Normalklima^{*)}, |
| Prüfung nach Lagerungsfolge D3/3: | 7 Tage Normalklima^{*)}, |
| | 4 Tage in kaltem Wasser (Prüftemperatur: 23 °C ± 2 °C), |
| Prüfung nach Lagerungsfolge D1/80°C^{**)}: | 7 Tage Normalklima^{*)}, |
| | 2 Stunden Lagerung bei 80 °C (Prüftemperatur: bei 80 °C), |
| Vorschubgeschwindigkeit: | 50 mm/Min. |

| | |
|---|---|
| ^{*)} 23 ± 2 °C und 50 ± 5 % relative Luftfeuchte | |
| ^{**)} Diese Prüfung ist nicht Bestandteil der DIN EN 204. | |

Die Einordnung in die Beanspruchungsgruppe D1 nach Lagerungsfolge 1 erfolgt bei einer Reißfestigkeit von ≥ 10 N/mm².

Die Einordnung in die Beanspruchungsgruppe D3 nach Lagerungsfolge 3 erfolgt bei einer Reißfestigkeit von ≥ 2 N/mm².

### Bestimmung der Abbindegeschwindigkeit

Die Ermittlung der Abbindegeschwindigkeit erfolgt an einfach überlappten Buchenholzprüfkörpern, die durch Verleimung von zwei jeweils 3 mm dicken, 85 mm langen und 20 mm breiten Buchenholztäfelchen unter Berücksichtigung folgender technischer Kenndaten hergestellt und geprüft werden:

| | |
|---|---|
| Preßzeit | 2,5 beziehungsweise 5 Minuten |
| Preßdruck | 0,7 ± 0,1 N/mm² |
| Anzahl Prüfkörper pro Prüffolge | 10 |
| Verklebte Fläche | 300 mm² |
| Prüftemperatur | 23 °C ± 2 °C |
| Vorschubgeschwindigkeit | 50 mm/Min. |

### Gefrier-Tau-Stabilität

Die Dispersionen werden 24 Stunden bei - 18 °C gelagert. Anschließend läßt man langsam wieder auf Raumtemperatur erwärmen und beurteilt die Dispersionen anhand ihres Aufstrichs.

**Tabelle 1**

| Beispiel | 1 | 2 | 3 | 4 | 5 | V1 | V2 | V3 |
|---|---|---|---|---|---|---|---|---|
| Zusammensetzung | | | | | | | | |
| Dispersion A1 [Teile] | 100 | | | | | | | |
| Dispersion A2 [Teile] | | 100 | 100 | | | | | |
| Dispersion A3 [Teile] | | | | 100 | 100 | | | |
| Dispersion AV [Teile] | | | | | | 100 | | |
| Dispersion B1 [Teile] | 67 | | 67 | | 67 | | | |
| Dispersion B2 [Teile] | | 43 | | 43 | | | | |
| Butyldiglykolacetat [Teile] | | | | | | 2 | | |
| Aluminiumchlorid 28 %ig [Teile] | | | | 2,8 | 2,9 | | | |
| T_{g} Komponente A [°C] | 30 | 30 | 30 | 30 | 30 | --- | --- | --- |
| T_{g} Komponente B [°C] | 10 | -10 | 10 | -10 | 10 | --- | --- | --- |

| Ausprüfung | | | | | | | | |
|---|---|---|---|---|---|---|---|---|
| MFT [°C] | 6 | 1 | 5 | 0 | 5 | 2 | 2,5 | 5,5 |
| Visk. Brookfield RVT 6/20 [Pa·s] | 16,75 | 23,25 | 20,25 | 13 | 13,34 | 38,8 | --- | --- |
| Reißfestigkeit gemäß EN 204 D1/1 [N/mm²] | 13,5 | 10,4 | 12,9 | 11,4 | 12,8 | 12,8 | --- | --- |
| Reißfestigkeit gemäß EN 204 D3/3 [N/mm²] | --- | --- | --- | 2 | 2,4 | --- | --- | --- |
| Wärmestand D1/80°C Reißfestigkeit [N/mm²] | 5,8 | 5 | 5,2 | 6,7 | 7,3 | 5,1 | 3,4 | 3,6 |

| Abbindegeschwindigkeit | | | | | | | | |
|---|---|---|---|---|---|---|---|---|
| Reißfestigkeit nach 2,5 Min. Preßzeit [N/mm²] | 2 | 1,7 | 2,1 | 1,9 | 1,7 | 1,9 | --- | --- |
| Reißfestigkeit nach 5 Min. Preßzeit [N/mm²] | 4 | 3,6 | 4 | 3,7 | 3,2 | 3,7 | --- | --- |
| Gefrier-/Tau-Stabilität bei -18 °C | stabil | stabil | stabil | stabil | stabil | koaguliert | stark verdickt | stark verdickt |

Die erfindungsgemäßen Beispiele 1 bis 5 verdeutlichen, daß im Vergleich zu einer dem Stand der Technik üblichen, mit dem Filmbildehilfsmittel Butyldiglykolacetat versetzten Polyvinylacetat-Homopolymerdispersion im Beispiel V1 ein bei einer MFT von 0 bis 6 °C vergleichbares anwendungstechnisches Eigenschaftsbild erreicht werden kann. Die erfindungsgemäßen Dispersionsmischungen sind darüberhinaus ohne Zusatz von Lösemitteln im Vergleich zu Beispiel V1 froststabil. Die Vergleichsbeispiele V2 und V3 verdeutlichen anhand von Vinylacetat/-Ethylen-Dispersionen mit homogener Polymerzusammensetzung, daß bei diesen mit einer vergleichbaren MFT keine im Vergleich zu den erfindungsgemäßen Beispielen genügend hohe Wärmebeständigkeit der Klebfugen erreicht werden kann.

### 2. Herstellung von Lösemittel- und Weichmacher-freien Pulverholzleimen

### Beispiel 6

Analog zu den Beispielen 1 bis 3 werden 100 Teile der Dispersion A1 mit 67 Teilen der Dispersion B2 abgemischt. Diese Dispersion dient als Ausgangsbasis für den unter Beispiel 7 beschriebenen Sprühtrocknungsversuch. Die klebetechnischen Daten sind in Tabelle 2 aufgeführt.

### Beispiel 7

### Sprühtrocknung der Dispersionsmischung aus Beispiel 6:

Die aus den Dispersionen A1 und B2 hergestellte Dispersionsmischung aus Beispiel 6 wird vor der Sprühtrocknung mit Wasser auf einen Feststoffgehalt von 35 % verdünnt. Als Trocknungsanlage wird ein Labortrockner der Fa. Niro (®Minor Sprühtrocknungsanlage) verwendet, in dem die Zerstäubung mittels Zweistoffdüse bei einem Düsendruck von 3 bar durchgeführt wird. Der Dispersionsdurchsatz liegt bei 1,5 l/Stunde, die Lufteintrittstemperatur 130 °C und die Gasaustrittstemperatur betragen 80 °C. Die Zugabe des Antibackmittels in Form einer hydrophierten Kieselsäure erfolgt getrennt von der Dispersion mit Hilfe einer Dosierschnecke. Es wird ein in Wasser redispergierbares, gut rieselfähiges Pulver (Asche bei 1000 °C: 1,7 %) erhalten, das sich durch eine gute Lagerstabilität auszeichnet.

Die leimtechnischen Kenndaten der 50 %igen Redispersion dieses Pulvers sind im Vergleich zur Ausgangsdispersion in der Tabelle 2 aufgelistet.

### Beispiel 8

### Sprühtrocknung der Dispersionsmischung aus den Dispersionen A4 und B3:

100 Teile der Dispersion A4 werden mit 39 Teilen der Dispersion B3 vermischt und mit Wasser auf einen Festgehalt von 37 % und eine Latexviskosität von 0,4 Pa·s (Epprecht-Rheometer B/II) eingestellt. Die MFT der Dispersionsmischung liegt unter 0°C. Die Dispersionsmischung wird anschließend in einem üblichen Zerstäubungsturm, dessen zylindrischer Teil eine Höhe von 1m und einen Durchmesser von 2,2 m und dessen konischer Teil einen Winkel von 60 Grad aufweist, sprühgetrocknet. Die Dispersion wird dem Turm am Kopf zugeführt und mit Hilfe einer Zerstäubungsscheibe, deren Durchmesser 12 cm beträgt, die 4 Öffnungen mit einem Durchmesser von jeweils 2,5 mm aufweist und die sich mit einer Drehzahl von 20.000 min dreht, versprüht. Durch eine weitere Öffnung in der Turmdecke wird ein Gemisch aus Stickstoff und hydrophobem Siliciumdioxid in den Turm geblasen und zwar mit einem Stickstoff-Durchsatz von 1200 kg/h. Der Stickstoff wird über einen Zyklonabscheider entfernt. Die Temperatur des Stickstoffs beträgt am Turmeingang 120 °C und am Abscheider 75 °C. Das Siliciumdioxyd hat einen durchschnittlichen Partikeldurchmesser von 28 nm, eine Oberfläche von 110 m²/g und einen Kohlenstoffgehalt von 2 %. Der pH-Wert der 4 %igen wäßrigen Suspension des Siliciumdioxids beträgt 7. Das Siliciumdioxid wird in einer Menge von 1% bezogen auf den Festgehalt der Dispersionsmischung eingesetzt. Die Sprühtrocknung verläuft störungsfrei über mehrere Stunden, über 90% eines gut rieselfähigen, wenig staubenden und gut lagerstabilen Dispersionspulvers wird über den Zyklonaustrag ausgetragen.

**Tabelle 2**

| Beispiel | 6 | 7 | 8 |
|---|---|---|---|
| Zusammensetzung | | Redispersion | Redispersion |
| Dispersion A1 [Teile] | 100 | 100 | |
| Dispersion A4 [Teile] | | | 100 |
| Dispersion B2 [Teile] | 67 | 67 | |
| Dispersion B3 [Teile] | | | 39 |
| | | | |
| T_{g} Komponente A [°C] | 30 | 30 | 30 |
| T_{g} Komponente B [°C] | -10 | -10 | -14 |

| Ausprüfung | | | |
|---|---|---|---|
| Festgehalt [%] | 50 | 50 | 53 |
| MFT [°C] | 0 | 0 | 0 |
| Visk. Brookfield RVT 6/20 [Pa·s] | 16,50 | 18 | 12 |
| Reißfestigkeit gemäß EN 204 D1/1 [N/mm²] | 14 | 15,3 | 15 |
| Reißfestigkeit gemäß EN 204 D3/3 [N/mm²] | --- | --- | -- |
| Wärmestand D1/80 °C Reißfestigkeit [N/mm²] | 3,6 | 3,7 | 5 |

| Abbindegeschwindigkeit | | | |
|---|---|---|---|
| Reißfestigkeit nach 2,5 Minuten Preßzeit [N/mm²] | 2,1 | 1,6 | 2,7 |
| Reißfestigkeit nach 5 Minuten Preßzeit [N/mm²] | 3,6 | 4,3 | 3,9 |
| Gefrier/Tau-Stabilität bei -18°C | stabil | stabil | stabil |

Aus der Tabelle 2 wird deutlich, daß aus der sprühgetrockneten Lösemittel- und Weichmacher-freien Dispersionsmischung des Beispiels 6 im Beispiel 7 eine Redispersion hergestellt werden kann, die sich in den Klebefestigkeiten von denen der versprühten Ausgangsdispersion nicht wesentlich unterscheidet. Beispiel 8 verdeutlicht, daß neben den guten Bindefestigkeiten der Holzverklebungen insbesondere auch eine gute Abbindegeschwindigkeit mit den erfindungsgemäßen Klebstoffen aus redispergierten Dispersionspulvern erreichbar ist.

## Patentansprüche

1. Heterogener, im wesentlichen mittels Schutzkolloiden stabilisierter, Lösemittel- und Weichmacher-freier Polyvinylester in Dispersions- oder Pulverform mit einer Filmbildungstemperatur unterhalb von 10 °C, enthaltend ein
Homo- oder Copolymerisat A mit einer Glasübergangstemperatur oberhalb von 20 °C aus
85 bis 100 Gew.-% mindestens eines Vinylesters von Carbonsäuren mit 1 bis 18 Kohlenstoffatomen (a1),
0 bis 5 Gew.-% mindestens einer α,β-ungesättigten Carbonsäure (a2)
0 bis 5 Gew.-% mindestens einer monoolefinisch ungesättigten Verbindung mit mindestens einer Amino- oder Amidgruppe (a3) sowie
0 bis 5 % Gew.-% mindestens eines mehrfach ethylenisch ungesättigten Monomeren (a4),
und ein
Copolymerisat B mit einer Glasübergangstemperatur unterhalb von 20 °C aus 45 bis 98 Gew.-% mindestens eines Vinylesters von Carbonsäuren mit 1 bis 18 Kohlenstoffatomen (b1),
2 bis 50 Gew.-% mindestens eines α-Monoolefins mit 1 bis 4 Kohlenstoffatomen (b2) sowie
0 bis 5 Gew.-% mindestens eines mehrfach ethylenisch ungesättigten Monomeren (b3), wobei der Mengenanteil der Polymere A und B 1 : (0,05 bis 1) beträgt.

2. Heterogener Polyvinylester nach Anspruch 1, **dadurch gekennzeichnet, daß** die minimale Filmbildungstemperatur im Bereich von 0 bis 7 °C liegt.

3. Heterogener Polyvinylester nach Anspruch 1, **dadurch gekennzeichnet, daß** die Glasübergangstemperatur des Polymers A oberhalb von 25 °C, die Glasübergangstemperatur des Polymers B unterhalb von 15 °C liegt.

4. Heterogener Polyvinylester nach Anspruch 1, **dadurch gekennzeichnet, daß** der Vinylester in den Polymeren A und B jeweils Vinylacetat ist und daß das α-Monoolefin im Polymer B Ethylen ist.

5. Heterogener Polyvinylester nach Anspruch 1, **dadurch gekennzeichnet, daß** das Polymer A Comonomereinheiten aus der Gruppe Acrylsäure, Methacrylsäure, N-Methylolacrylamid und N-Methylolmethacrylamid enthält.

6. Heterogener Polyvinylester nach Anspruch 1, **dadurch gekennzeichnet, daß** die Polymere A und B jeweils durch 2 bis 20 Gew.-% Polyvinylalkohol stabilisiert sind.

7. Verfahren zur Herstellung eines heterogenen Polyvinylesters in Dispersionsoder Pulverform nach Anspruch 1 durch Mischen einer Dispersion enthaltend ein Homo- oder Copolymerisats A mit einer Glasübergangstemperatur oberhalb von 20 °C aus
85 bis 100 Gew.-% mindestens eines Vinylesters von Carbonsäuren mit 1 bis 18 Kohlenstoffatomen (a1),
0 bis 5 Gew.-% mindestens einer α,β-ungesättigten Carbonsäure (a2),
0 bis 5 Gew.-% mindestens einer monoolefinisch ungesättigten Verbindung mit mindestens einer Amino- oder Amidgruppe (a3) sowie
0 bis 5 Gew.-% mindestens eines mehrfach ethylenisch ungesättigten Monomeren (a4),
mit einer Dispersion, enthaltend ein Copolymerisat B mit einer Glasübergangstemperatur unterhalb von 20 °C aus
45 bis 98 Gew.-% mindestens eines Vinylesters von Carbonsäuren mit 1 bis 18 Kohlenstoffatomen (b1),
2 bis 50 Gew.-% mindestens eines α-Monoolefins mit 1 bis 4 Kohlenstoffatomen (b2) sowie
0 bis 5 Gew.-% mindestens eines mehrfach ethylenisch ungesättigten Monomeren (b3), wobei der Mengenanteil der Polymere A und B 1 : (0,05 bis 1) beträgt, und gegebenenfalls anschließendes Sprühtrocknen und gegebenenfalls anschließendes Redispergieren in Wasser.

8. Verwendung einer heterogenen Polyvinylester-Dispersion nach Anspruch 1 als Klebstoff zum Verkleben von porösen oder semiporösen Substraten.

9. Verwendung einer heterogenen Polyvinylester-Dispersion nach Anspruch 8 zum Verkleben von Holz.

## Claims

1. A heterogeneous, solvent- and plasticizer-free polyvinyl ester in dispersion or powder form which is stabilized essentially by means of protective colloids and has a filming temperature of below 10°C, comprising
a homopolymer or copolymer A having a glass transition temperature of above 20°C comprising
from 85 to 100% by weight of at least one vinyl ester of carboxylic acids having 1 to 18 carbon atoms (a1),
from 0 to 5% by weight of at least one α,β-unsaturated carboxylic acid (a2),
from 0 to 5% by weight of at least one monoolefinically unsaturated compound having at least one amino or amide group (a3) and
from 0 to 5% by weight of at least one polyethylenically unsaturated monomer (a4), and
a copolymer B having a glass transition temperature of below 20°C comprising
from 45 to 98% by weight of at least one vinyl ester of carboxylic acids having 1 to 18 carbon atoms (b1),
from 2 to 50% by weight of at least one α-monoolefin having 1 to 4 carbon atoms (b2) and
from 0 to 5% by weight of at least one polyethylenically unsaturated monomer (b3), the mixing ratio of polymers A and B being from 1 : (0.05 to 1).

2. A heterogeneous polyvinyl ester as claimed in claim 1, wherein the minimum filming temperature is in the range from 0 to 7°C.

3. A heterogeneous polyvinyl ester as claimed in claim 1, wherein the glass transition temperature of polymer A is above 25°C and the glass transition temperature of polymer B is below 15°C.

4. A heterogeneous polyvinyl ester as claimed in claim 1, wherein the vinyl ester in the polymers A and B is in each case vinyl acetate and wherein the α-monoolefin in the polymer B is ethylene.

5. A heterogeneous polyvinyl ester as claimed in claim 1, wherein polymer A contains comonomer units from the group consisting of acrylic acid, methacrylic acid, N-methylolacrylamide and N-methylolmethacrylamide.

6. A heterogeneous polyvinyl ester as claimed in claim 1, wherein polymers A and B are each stabilized by from 2 to 20% by weight of polyvinyl alcohol.

7. A process for the preparation of a heterogeneous polyvinyl ester in dispersion or powder form as claimed in claim 1 by mixing a dispersion comprising a homopolymer or copolymer A having a glass transition temperature of above 20°C comprising
from 85 to 100% by weight of at least one vinyl ester of carboxylic acids having 1 to 18 carbon atoms (a1),
from 0 to 5% by weight of at least one α,β-unsaturated carboxylic acid (a2),
from 0 to 5% by weight of at least one monoolefinically unsaturated compound having at least one amino or amide group (a3) and
from 0 to 5% by weight of at least one polyethylenically unsaturated monomer (a4),
with a dispersion comprising a copolymer B having a glass transition temperature of below 20°C comprising
from 45 to 98% by weight of at least one vinyl ester of carboxylic acids having 1 to 18 carbon atoms (b1),
from 2 to 50% by weight of at least one α-monoolefin having 1 to 4 carbon atoms (b2) and
from 0 to 5% by weight of at least one polyethylenically unsaturated monomer (b3), the mixing ratio of polymers A and B being from 1 : (0.05 to 1),
if desired followed by spray-drying and, if desired, redispersion in water.

8. The use of a heterogeneous polyvinyl ester dispersion as claimed in claim 1 as an adhesive for bonding porous or semiporous substrates.

9. The use of a heterogeneous polyvinyl ester dispersion as claimed in claim 8 for bonding wood.

## Revendications

1. Polyester de vinyle hétérogène, stabilisé essentiellement au moyen de colloïdes protecteurs, exempt de solvant et de plastifiant sous forme de dispersion ou de poudre ayant une température de formation de film inférieure à 10°C, contenant un
homo- ou copolymérisat A avec une température de transition vitreuse supérieure à 20°C constitué de
85 à 100 % en poids d'au moins un ester de vinyle d'acides carboxyliques avec 1 à 18 atomes de carbone (a1),
0 à 5 % en poids d'au moins un acide carboxylique α,β-insaturé (a2),
0 à 5 % en poids d'au moins un composé monooléfiniquement insaturé avec au moins un groupe amino ou amide (a3) ainsi que
0 à 5 % en poids d'au moins un monomère plusieurs fois éthyléniquement insaturé (a4),
et un
copolymérisat B avec une température de transition vitreuse inférieure à 20°C constitué de 45 à 98 % en poids d'au moins un ester de vinyle d'acides carboxyliques avec 1 à 18 atomes de carbone (b1),
2 à 50 % en poids d'au moins une α-monooléfine avec 1 à 4 atomes de carbone (b2) ainsi que
0 à 5 % en poids d'au moins un monomère plusieurs fois éthyléniquement insaturé (b3), dans lequel la proportion en quantité des polymères A et B1 s'élève à 1 : (0,05 à 1).

2. Polyester de vinyle hétérogène selon la revendication 1, **caractérisé en ce que** la température minimale de formation de film se situe dans la gamme de 0 à 7°C.

3. Polyester de vinyle hétérogène selon la revendication 1, **caractérisé en ce que** la température de transition vitreuse du polymère A se situe au-dessus de 25°C, la température de transition vitreuse du polymère B se situe au-dessous de 15°C.

4. Polyester de vinyle hétérogène selon la revendication 1, **caractérisé en ce que** l'ester de vinyle dans les polymères A et B est respectivement l'acétate de vinyle et **en ce que** l'α-monooléfine dans le polymère B est l'éthylène.

5. Polyester de vinyle hétérogène selon la revendication 1, **caractérisé en ce que** le polymère A contient des motifs de comonomères choisis parmi l'acide acrylique, l'acide méthacrylique, le N-méthylolacrylamide et le N-méthylolméthacrylamide.

6. Polyester de vinyle hétérogène selon la revendication 1, **caractérisé en ce que** les polymères A et B sont respectivement stabilisés par 2 à 20 %. en poids d'alcool polyvinylique.

7. Procédé de préparation d'un polyester de vinyle hétérogène sous forme de dispersion ou de poudre selon la revendication 1 par mélange d'une dispersion contenant un homo- ou copolymérisat A avec une température de transition vitreuse supérieure à 20°C constitué de
85 à 100 % en poids d'au moins un ester de vinyle d'acides carboxyliques avec 1 à 18 atomes de carbone (a1),
0 à 5.% en poids d'au moins un acide carboxylique α,β-insaturé (a2),
0 à 5 % en poids d'au moins un composé monooléfiniquement insaturé avec au moins un groupe amino ou amide (a3) ainsi que
0 à 5 % en poids d'au moins un monomère plusieurs fois éthyléniquement insaturé (a4),
avec une dispersion, contenant un copolymérisat B avec une température de transition vitreuse inférieure à 20°C constitué de
45 à 98 % en poids d'au moins un ester de vinyle d'acides carboxyliques avec 1 à 18 atomes de carbone (b1),
2 à 50 % en poids d'au moins une α-monooléfine avec 1 à 4 atomes de carbone (b2) ainsi que
0 à 5 % en poids d'au moins un monomère plusieurs fois éthyléniquement insaturé (b3), dans lequel la proportion en quantité des polymères A et B1 s'élève à 1 : (0,05 à 1), et éventuellement ensuite séchage par pulvérisation et éventuellement ensuite redispersion dans l'eau.

8. Utilisation d'une dispersion de polyester de vinyle hétérogène selon la revendication 1 comme colle pour le collage de substrats poreux ou semiporeux.

9. Utilisation d'une dispersion de polyester de vinyle hétérogène selon la revendication 8 pour le collage du bois.
